# EUROPÄISCHE PATENTANMELDUNG

(11) **EP 1 518 725 A2**
(43) Veröffentlichungstag der Anmeldung: **30.03.2005**
(21) Anmeldenummer: 04022543.5
(22) Anmeldetag: 22.09.2004
(51) Int. Cl.: B60H 1/00

(54) **Vorrichtung und Verfahren zum Einstellen von Sollwerten einer Kraftfahrzeugklimaanlage**

(30) Priorität: 26.09.2003 DE 10344701
(71) Anmelder: Behr-Hella Thermocontrol GmbH, 70469 Stuttgart (DE)
(72) Erfinder: Knittel, Otto, Dipl.-Ing., 59494 Soest (DE); Röhling, Dieter, 59558 Lippstadt (DE)
(74) Vertreter: Graefe, Jörg

(57) **Zusammenfassung**

Die vorliegende Erfindung betrifft ein Verfahren zum Einstellen einer Kraftfahrzeugklimaanlage mit folgenden Schritten: 1. qualitative Vorgabe der zu erzielenden Veränderung durch einen Benutzer, 2. Auswahl des Körperbereichs, in welchem die Klimaanlage eingestellt werden soll, und 3. Veränderung der Sollwerte für den Volumenstrom, der Temperatur und/oder der Austrittswege von klimatisierten Luftströme, die von der Kraftfahrzeugklimaanlage erzeugbar sind, in Abhängigkeit des ausgewählten Körperbereichs und der qualitativen Vorgabe durch den Benutzer.

## Beschreibung

Aus dem täglichen Leben sind eine Vielzahl von Vorrichtungen zum Einstellen von Sollwerten einer Kraftfahrzeugklimaanlage bekannt. Üblicherweise sind diese Vorrichtungen so aufgebaut, dass über verschiedene Einstellmittel die Temperatur, die Austrittswege der klimatisierten Luftströme und der Volumenstrom der klimatisierten Luftströme eingestellt werden kann. Es müssen bei diesen Vorrichtungen quantitativ die Sollwerte eingestellt werden, nach denen die Klimaanlage dann die klimatisierte Luft temperiert und verteilt. Eine derart aufwendige Einstellung der Sollwerte ist für die meisten Anwendungsfälle im Grunde genommen unnötig. Ein Benutzer wird in der Regel nämlich nicht die Sollwerte nach einer gewünschten Temperatur einstellen sondern vielmehr auf sein individuelles Temperaturempfinden reagieren also eine gefühlte Temperatur zum Anlass nehmen, die Einstellung der Klimaanlage zu verändern. Empfindet der Bediener beispielsweise, dass seine Beine zu warm sind, wünscht er eine kältere gefühlte Temperatur im Beinbereich. Eine kältere gefühlte Temperatur lässt sich dabei dadurch erreichen, dass die durch die Luftaustrittswege in den Beinbereich geführten klimatisierten Luftströme eine geringere Temperatur oder aber einen höheren Volumenstrom haben. Es ist also nicht notwendig, dass die Temperatur des Luftstroms, welcher in den Beinbereich mündet, verringert wird, sondern es kann durchaus ausreichend sein, wenn der Volumenstrom vergrößert wird. Der Einfluss der Strömungsgeschwindigkeit auf das Temperaturempfinden eines Menschen ist auch unter dem Begriff Chill-Faktor bekannt geworden.

Der vorliegenden Erfindung liegt daher die Aufgabe zugrunde, eine Vorrichtung und ein Verfahren zum Einstellen von Sollwerten einer Kraftfahrzeugklimaanlage vorzuschlagen, bei welcher beziehungsweise bei welchem der Bediener aufgrund seines subjektiven Temperaturempfindens eine einfache Einstellung vornehmen kann.

Die Aufgabe wird hinsichtlich der Vorrichtung durch eine Vorrichtung gemäß Anspruch 1 und hinsichtlich des Verfahrens durch ein Verfahren gemäß Anspruch 8 gelöst. Demgemäß weist eine erfindungsgemäße Vorrichtung ein Anzeigemittel auf, mittels welchem zumindest eine Silhouette einer Person darstellbar ist, wobei in der Silhouette einzelne Körperbereiche dargestellt werden. Mit einem Auswahlmittel der Vorrichtung, können Körperbereiche ausgewählt werden, die zu klimatisieren sind, beziehungsweise für welche die Einstellungen der Klimaanlage verändert werden sollen. Ferner weist die Vorrichtung ein Bestätigungsmittel auf, mit welchem eine mittels des Ausfallmittels getroffene Auswahl bestätigbar ist. Mit einem Einstellmittel der Vorrichtung kann ein Benutzer eine qualitative Vorgabe der erzielenden Veränderungen machen. Schließlich weist die erfindungsgemäße Vorrichtung ein Veränderungsmittel auf, mit welchem aus der qualitativen Vorgabe und dem ausgewählten Körperbereich Sollwerte für den Volumenstrom, der Temperatur und/oder der Austrittswege von klimatisierten Luftströmen, die von der Klimaanlage erzeugbar sind, ermittelt und an die Klimaanlage gegeben werden.

Mit einer solchen erfindungsgemäßen Vorrichtung kann ein erfindungsgemäßes Verfahren durchgeführt werden, bei welchem der Benutzer eine qualitative Vorgabe der zu erzielenden Veränderungen vornimmt, den Körperbereich auswählt, für welchen die Klimaanlage eingestellt werden soll und anschließend die Sollwerte für den Volumenstrom, der Temperatur und/oder die Austrittswege von klimatisierten Luftströmen, die von der Kraftfahrzeugklimaanlage erzeugbar sind, in Abhängigkeit des ausgewählten Körperbereichs und der qualitativen Vorgabe durch den Benutzer vornimmt. Dabei kann die Auswahl des Körperbereichs vor der qualitativen Vorgabe erfolgen oder umgekehrt.

Bei einer erfindungsgemäßen Vorrichtung, kann vorteilhaft das Auswahlmittel und das Bestätigungsmittel zu einem kombinierten Auswahl- und Bestätigungsmittel zusammengefasst sein. Bei diesem Auswahl- und Bestätigungsmittel kann es sich um eine Mikromaus, insbesondere um eine Mikromaus nach dem HALIOS Prinzip handeln, wie sie aus dem Aufsatz "Elektronikkonzept erfüllt Optiksensorträume" (Quelle unbekannt, bitte mitteilen) bekannt ist.

Das Anzeigemittel ist vorteilhaft ein Flüssigkeitskristallbildschirm.

Das Einstellmittel einer erfindungsgemäßen Vorrichtung kann zwei durch Tasten betätigbare Einstellelemente aufweisen, mit denen die qualitative Vorgabe für die Einstellung der Klimaanlage gemacht werden kann. Ferner kann die Vorrichtung mittels des Anzeigemittels einen Zeiger darstellen, welcher durch die Betätigung des Auswahlmittels zu den auszuwählenden mittels des Anzeigemittels dargestellten Körperbereichen bewegt werden kann.

Außerdem ist es möglich, dass die erfindungsgemäße Vorrichtung über ein Hinweismittel verfügt, welches den Benutzer akustisch darauf hinweist, welcher Körperbereich derzeit ausgewählt ist.

Schließlich kann in einer besonders vorteilhaften Vorrichtung das kombinierte Auswahl- und Bestätigungsmittel mit dem Einstellmittel kombiniert sein, wodurch sich die Anzahl der Bedienelemente weiter reduziert.

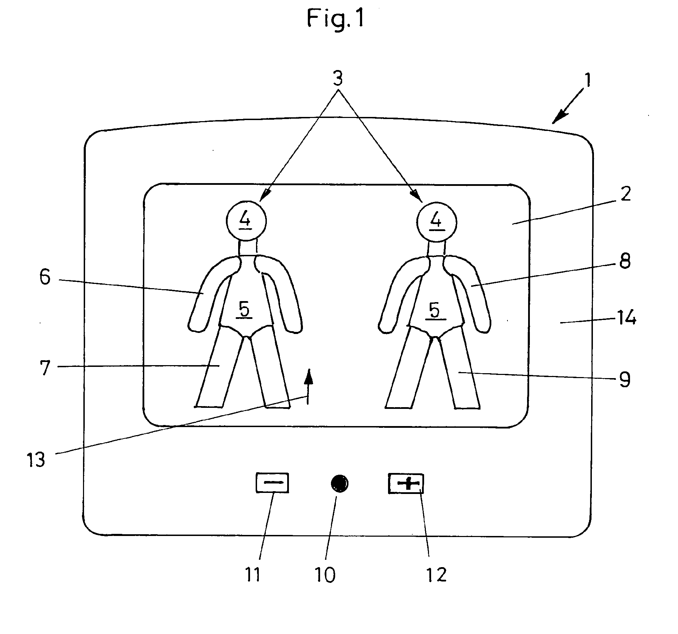

Ein Ausführungsbeispiel für eine Vorrichtung zum Einstellen einer Kraftfahrzeugklimaanlage ist anhand der Zeichnung näher beschrieben. Darin zeigt
- Fig. 1: eine Ansicht der erfindungsgemäßen Vorrichtung.

Die in der Fig. 1 dargestellte Vorrichtung 1 zum Einstellen von Sollwerden einer Kraftfahrzeugklimaanlage weist ein Gehäuse 14 auf, in welches ein Anzeigemittel 2, es handelt sich hierbei um ein Flüssigkeitskristallbildschirm, eingesetzt ist. Ferner sind in das Gehäuse unterhalb des Anzeigemittels 2 ein Auswahl- und Bestätigungsmittel 10 und zwei Einstellelement 11, 12 eines Einstellmittels eingesetzt.

Mittels des Anzeigemittels 2 sind zwei Silhouetten 3 von Personen dargestellt. Innerhalb dieser Silhouetten sind Körperbereiche 2 bis 9 gekennzeichnet. Bei diesen Körperbereichen handelt es sich zum Einen um den Kopf 4, den Rumpf 5, den linken Arm und Schulterbereich 6, das linke Bein 7, den rechten Arm und Schulterbereich 8 und das rechte Bein 9. Ferner ist mittels des Anzeigemittels 2 ein Zeiger 13 darstellbar.

Bei dem Einstell- und Bestätigungsmittel 10 handelt es sich um eine Mikromaus, mit welcher eine zweidimensionale Bewegung zum Auswählen und eine Druckbewegung zum Bestätigen erfasst werden kann. Durch die Bewegung der Mikromaus werden einzelne Körperbereiche ausgewählt, deren Klimatisierung verändert werden soll. Dieses wird optisch mittels des Anzeigemittels 2 dargestellt. Bei der in der Figur dargestellten Variante wird dazu durch die Bewegung des Auswahl- und Bestätigungsmittels 10 der Zeiger 13 in dem Anzeigemittel 2 bewegt. Der Zeiger 13 kann dabei zum Markieren des ausgewählten Körperbereichs 4 bis 9 auf diesen Körperbereich 4 bis 9 zeigen, wie dies von Computermäusen bekannt ist.

Ebenso ist jedoch denkbar, dass bei einer erfindungsgemäßen Vorrichtung ein Zeiger 13, der mittels des Anzeigemittels 2 dargestellt wird, nicht vorgesehen ist. Durch die Bewegung des Einstell- und Bestätigungsmittels 10 kann dann je nach Richtung der Bewegung ein von einem Ausgangspunkt in Bewegungsrichtung benachbart liegender Körperbereich 4 bis 9 ausgewählt werden, der dann farblich in dem Anzeigemittel 2 markiert wird. Liegt der Ausgangspunkt beispielsweise im Bereich des Rumpfes der linken Person, kann durch eine Bewegung des Anzeigemittels nach oben der Kopfbereich 4 ausgewählt werden.

Grundsätzlich ist es auch denkbar, dass lediglich die Silhouette einer Person in dem Anzeigemittel dargestellt wird. Umgekehrt ist es auch möglich, dass für alle in dem Kraftfahrzeug befindlichen Personen eine Silhouette mittels des Anzeigemittels angezeigt wird. Ferner ist es möglich, dass die Silhouetten nicht in einer Frontansicht sondern in einer Rückansicht oder in einer seitlichen Ansicht dargestellt werden.

Mit den Einstellelementen 11, 12 kann ein Bediener eine qualitative Veränderung der Klimatisierung vorgeben. Er gibt anders als beim Stand der Technik dabei nicht konkrete Veränderungen für die Strömungsgeschwindigkeit von Luftströmen, welche aus Luftaustrittsdüsen austreten, die Temperatur derartiger Luftströme oder die Austrittswege dieser Luftströme vor. Der Bediener entscheidet sich vielmehr aus seinem subjektiven Behaglichkeitsempfinden zu einer Veränderung der gefühlten Temperatur. Über die beiden Einstellelemente 11, 12 gibt er vor, ob die Umgebung für einen bestimmten Körperbereich subjektiv kälter oder wärmer sein soll. Dementsprechend bedient er das Einstellelement 11 für eine Verringerung der subjektiven Temperatur beziehungsweise das Einstellelement 12 für eine Erhöhung der subjektiven gefühlten Temperatur.

Vorzugsweise wird der Bediener zunächst die Richtung vorgeben, in welcher eine Veränderung der gefühlten Temperatur erfolgen soll. Anschließend wird er mittels des Auswahl- und Bestätigungsmittels 10 den Körperbereich, für welchen diese vorgegebene Änderung der gefühlten Temperatur gelten soll, auswählen und bestätigen. Aufgrund der Vorgabe für die gewünschte Änderung der gefühlten Temperatur und dem ausgewählten Körperbereich ermittelt dann die erfindungsgemäße Vorrichtung mittels eines nicht dargestellten Veränderungsmittels die vorzunehmenden Veränderungen der Sollwerte für die gewählten Austrittswege der klimatisierten Luftströme, den Volumenstrom und/oder der Temperatur dieser Luftströme.

Die Einstellung einer Kraftfahrzeugklimaanlage erfolgt somit erfindungsgemäß nicht durch die Vorgabe quantitativer Werte für die Temperatur, den Volumenstrom und/oder der Austrittswege von klimatisierten Luftströmen sondern vielmehr durch die qualitative Vorgabe in Richtung einer gewünschte gefühlte Temperatur in einem Körperbereich. Aus der vorgegebenen gewünschten Veränderung der gefühlten Temperatur in dem ausgewählten Körperbereich werden dann quantitative Veränderungen für die Sollwerte des Volumenstroms, der Temperatur und/oder der Austrittswege der klimatisierten Luftströme ermittelt. Die Bedienung einer erfindungsgemäßen Vorrichtung, welche ein erfindungsgemäßes Verfahren ermöglicht, ist einfacher als die Bedienung einer herkömmlichen Klimaanlage, da diese Vorrichtung eine deutlich geringere Anzahl von Bedienelementen aufweist als eine herkömmliche Vorrichtung zum Einstellen einer Kraftfahrzeugklimaanlage.

## Patentansprüche

1. Vorrichtung (1) zum Einstellen von Sollwerten einer Kraftfahrzeugklimaanlage
- mit einem Anzeigemittel(2), mittels welchem zumindest eine Silhouette (3) einer Person darstellbar ist, wobei in der Silhouette (3) einzelne Körperbereiche (4 bis 9)dargestellt sind,
- mit einem Auswahlmittel, mittels welchem Körperbereiche auswählbar sind, und
- mit einem Bestätigungsmittel, mit welchem ein mittels des Auswahlmittels getroffene Auswahl betätigbar ist.
- mit einem Einstellmittel (11, 12), mit welchem eine qualitative Vorgabe der zu erzielenden Veränderung durch einen Benutzer erfolgt, und
- mit einem Veränderungsmittel, mit welchem aus der qualitativen Vorgabe und dem ausgewählten Körperbereich (4 bis 9) Sollwerte für den Volumenstrom, der Temperatur und/oder der Austrittswege von klimatisierten Luftströmen, die von der Klimaanlage erzeugbar sind, ermittelbar und veränderbar sind.

2. Vorrichtung nach dem vorhergehenden Anspruch, **dadurch gekennzeichnet, dass** das Auswahlmittel und das Bestätigungsmittel zu einem Auswahl- und Bestätigungsmittel (10) zusammengefasst ist.

3. Vorrichtung nach dem vorhergehenden Anspruch, **dadurch gekennzeichnet, dass** das Auswahl- und Bestätigungsmittel (10) eine Mikromaus ist.

4. Vorrichtung nach dem vorhergehenden Anspruch, **dadurch gekennzeichnet, dass** das die Mikromaus eine HALIOS-Mikromaus ist.

5. Vorrichtung nach einem der vorgehenden Anasprüchen, **dadurch gekennzeichnet, dass** das Anzeigemittel (2) ein Flüssigkeitskristall-Bildschirm ist.

6. Vorrichtung nach einem der vorgehenden Ansprüchen, **dadurch gekennzeichnet, dass** das Einstellmittel zwei durch Tasten betätigbare Einstellelemente (11, 12) umfasst.

7. Vorrichtung nach einem der vorhergehenden Ansprüche, **dadurch gekennzeichnet, dass** ein mittels des Anzeigenmittels (2) darstellbarer Zeiger (13) durch Betätigung des Auswahlmittels zu den auszuwählenden, mittels des Anzeigenmittels (2) dargestellten Körperbereichen (4 bis 9) bewegbar ist.

8. Verfahren zum Einstellen einer Kraftfahrzeugklimaanlage insbesondere mit einer Vorrichtung nach einem der Ansprüche 1 bis 7 mit folgenden Schritten:
- qualitative Vorgabe der zu erzielenden Veränderung durch einen Benutzer;
- Auswahl des Körperbereichs, in welchem die Klimaanlage eingestellt werden soll;
- Veränderung der Sollwerte für den Volumenstrom, der Temperatur und/oder der Austrittswege von klimatisierten Luftströme, die von der Kraftfahrzeugklimaanlage erzeugbar sind, in Abhängigkeit des ausgewählten Körperbereichs und der qualitativen Vorgabe durch den Benutzer.

9. Verfahren nach dem vorhergehenden Anspruch, **dadurch gekennzeichnet, dass** die Auswahl des Körperbereichs vor der qualitativen Vorgabe erfolgt.

10. Verfahren nach Anspruch 8, **dadurch gekennzeichnet, dass** die qualitative Vorgabe vor der Auswahl des Körperbereichs erfolgt.
